# EUROPEAN PATENT APPLICATION

(11) **EP 1 842 809 A1**
(43) Date of publication of application: **10.10.2007**
(21) Application number: 07105583.4
(22) Date of filing: 03.04.2007
(51) Int. Cl.: B65G 47/90, B65G 47/91, B65G 59/02, B65G 61/00, B21D 43/10

(54) **Products handling apparatus of advanced type**

(30) Priority: 04.04.2006 IT TV20060057
(71) Applicant: OMA S.r.l., 37069 Villafranca di Verona (IT)
(72) Inventor: Baldi, Giampietro, 37069 Villafranca di Verona (IT)
(74) Representative: Jorio, Paolo

(57) **Abstract**

Apparatus (1) for handling products (2) provided with a supporting crossbar (5) which extends over a handling zone of the products (2) in a substantially horizontal direction, an articulated arm (6) with pantograph-type movement which is fixed onto said supporting crossbar (5) so as to be able to open in a scissor-like manner on a substantially horizontal plane which extends over the handling zone of the products (2), and has a mobile gripping member (7) which is fixed onto the free end of the articulated arm (6) so as to face the handling zone of the products (2) underneath and is structured so as to be able to selectively grip and withhold a compact group of products (2); the cited apparatus (1) being further provided with a crank (23, 24, 24a) or rod-crank (23, 26, 27, 28) moving device (21) capable of opening the cited articulate arm (6) with pantograph-type movement in a scissor-like manner.

## Description

The present invention relates to a products handling apparatus of advanced type.

More in detail, the present invention relates to an apparatus for handling glass bottles and similar products, use to which the following description refers purely by way of example.

Through European patent EP-1338536 there are known pallet unloading machines in which the collection of supporting trays from the top of the pallet of bottles being unloaded within the pallet unloading machine is obtained by means of an articulated arm with pantograph-type movement which fixedly carries a pneumatically operating gripping member on its end.

More in detail, the articulated arm with pantograph-type movement is protrudingly fixed onto a horizontal supporting crossbar which is mobile in the vertical direction on a supporting frame of the machine, and consists of a first half-arm rotationally mounted on the body of the supporting crossbar so as to rotate with respect to the latter about a first vertical axis; of a second half-arm rotationally mounted on the free end of the first half-arm so as to freely rotate with respect to the latter about a second vertical axis; and of a gear cascade capable of transmitting to the body of the second half-arm the rotary motion with which the first half-arm rotates about the first vertical axis, so as to coordinate the scissor-like opening of the two half-arms with the rotation of the first half-arm with respect to the horizontal supporting crossbar.

Instead, regarding the first half-arm of the articulated arm with pantograph-type movement, it is hinged onto the horizontal supporting crossbar by means of a through pin which extends coaxially to the mentioned first vertical axis, engaging the body of the crossbar itself in freely rotational manner. A first end of the pin is rigidly keyed onto the body of the first half-arm, while the second end of the aforesaid pin is mechanically coupled with a handling member which is capable, upon command, to rotate the pin itself about the first vertical axis so as to cause the scissor-like opening of the two half-arms.

While offering extremely small dimensions, the use of the articulated arm with pantograph-type movement until today has been restricted only to the handling of light-weight products, such as precisely the supporting trays used for the construction of glass bottle pallets, because the twisting torques to be applied to the pin for opening the two half-arms in a scissor-like manner considerably increase as the weight of the moved products increases, with all of the disadvantages that this implies. The demand for high twisting torques indeed requires the use of handling members with higher power, weight and running costs than the other solutions currently used in the field, making the use of the articulated arm with pantograph-type movement not very cost-effective for handling products even only slightly heavier than the normal supporting trays.

It is the object of the present invention to make a product handling apparatus which is provided with an articulated arm with pantograph-type movement, and which is capable of handling glass bottles and, more in general, products heavier than the traditional pallet supporting trays, without requiring the presence of handling members of above-average power.

According to the present invention, there is made a product handling apparatus of the perfected type as set forth in claim 1 and preferably, but not necessarily, in any of the dependent claims.

The present invention will now be described with reference to the accompanying drawings which illustrate a non-limitative example of embodiment thereof, in which:
- figure 1 is a side view of a glass bottle handling apparatus made according to the dictates of the present invention, with parts in section and parts removed for clarity;
- figure 2 is a plan view of the apparatus shown in figure 1 with parts removed for clarity; while
- figures 3 and 4 are respectively a side view and a plan view of a variant of the apparatus shown in figures 1 and 2, with parts in section and parts removed for clarity.

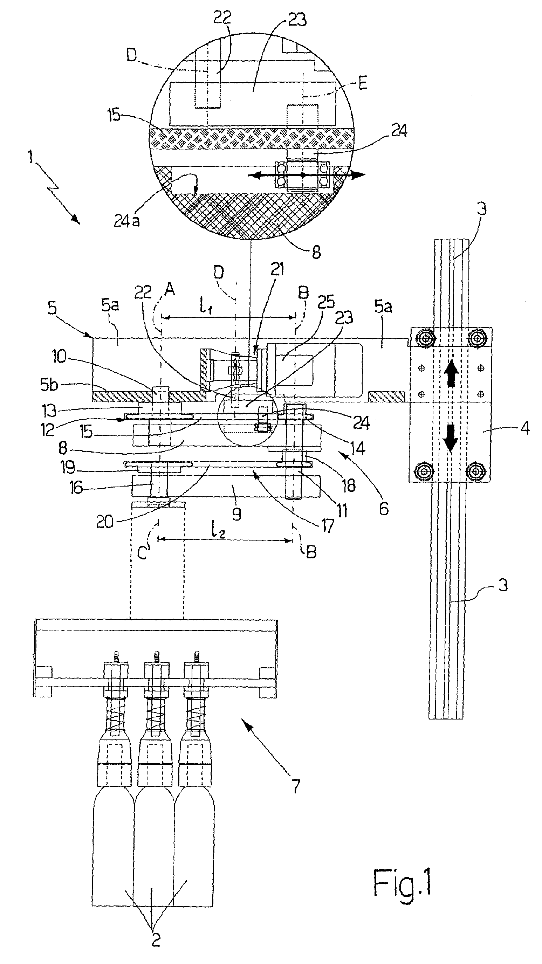

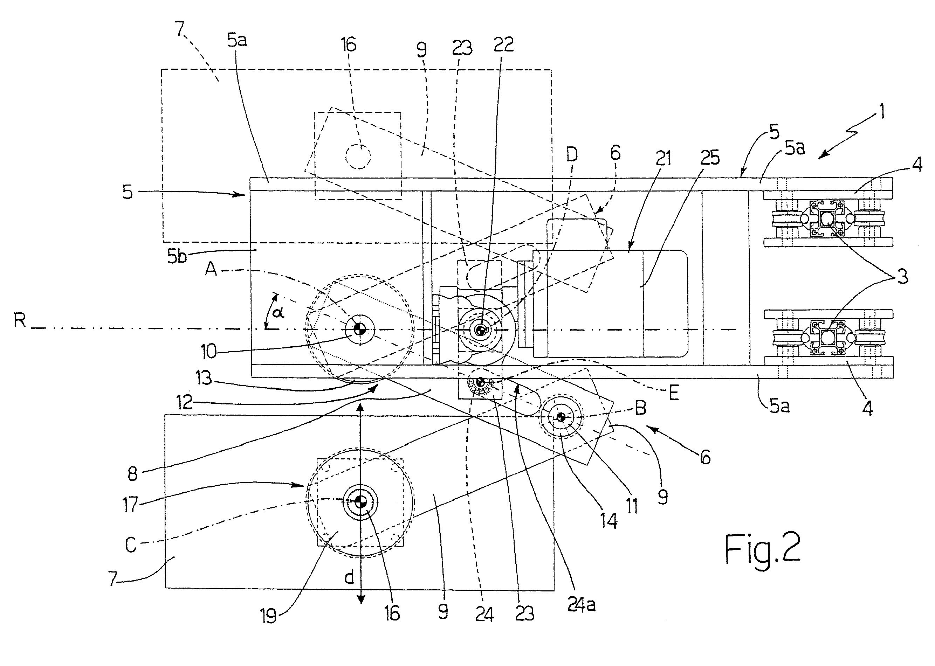

With reference to figures 1 and 2, number 1 indicates as a whole an apparatus for handling products along two substantially and reciprocally perpendicular directions, which finds particularly advantageous use in the handling of glass bottles 2 or similar products.

Apparatus 1 comprises a supporting structure resting on the ground, which is provided with a rectilinear supporting guide 3 which extends in substantially vertical direction, by the side of a handling zone of bottles 2; a supporting carriage 4 slidingly mounted on straight guide 3; handling means of known type (not shown) capable of, upon command, displacing carriage 4 along straight guide 3; and a supporting crossbar 5 which protrudingly extends from carriage 3 over the handling zone of bottles 2 in a substantially horizontal direction, so as to be able to move in vertical direction over the handling zone of the bottles 2 itself being maintained always parallel to itself.

Apparatus 1 further comprises an articulated arm 6 with pantograph-type movement which is fixed underneath supporting crossbar 5 so as to be able to open or spread in a scissor-like manner on a substantially horizontal plane (parallel to the plane of the sheet in figure 2) which extends immediately over the handling zone of bottles 2, and a mobile gripping member 7 which is fixed onto the free end of articulated arm 6 so as to face the handling zone of bottles 2 underneath, and is structured so as to be able to selectively grip and withhold a orderly and compact group of bottles 2.

Mobile gripping member 7 is a device which is already widely known in the field and will therefore not be further described. Obviously, mobile gripping member 7 may be replaced by another type of mobile gripping member structured to grip and withhold other types of products.

With reference to figures 1 and 2, specifically, in the example shown, supporting crossbar 5 is formed by a straight beam 5 with a U-shaped cross section which has two side flanks 5a arranged vertically and central position 5b arranged in substantially horizontal position, directly facing the handling zone of bottles 2, so as to act as a fastening point for articulated arm 6 to crossbar 5.

Regarding instead the movement of articulated arm 6 with pantograph-type movement, it comprises an upper half-arm, hereinafter indicated by number8, which is rotationally mounted on supporting crossbar 5 or, better, on central portion 5b of crossbar 5, so as to be able to rotate with respect to the latter about a substantially vertical axis A, and a lower half-arm, hereinafter indicated by number 9, which is rotationally mounted on the free end of half-arm 8 so as to be able to freely rotate with respect to the latter about an axis B parallel to axis A.

More in detail, half-arms 8 and 9 extend horizontally one over the other so as to be, at rest, substantially coplanar to a vertical reference plane R intersecting axis A, and half-arm 8 is hinged onto supporting crossbar 5 at its first end by means of a cylindrical through pin 10 which extends through flat portion 5a of crossbar 5 coaxially to axis A and engages in a freely rotational manner the body of half-arm 8 by interposition of appropriate rolling bearings of known type. In other words, the first end of half-arm 8 is rotationally mounted on through pin 10 which protrudingly extends from flat portion 5a of crossbar 5 coaxially to axis A, and is rigidly connected to flat portion 5a itself.

Instead, half-arm 9 has a first end hinged onto the second end of half-arm 8 by means of a cylindrical through pin 11 which extends coaxially to axis B through the body of half-arm 8 and half-arm 9. More in detail, pin 11 of half-arm 9 is rigidly keyed onto the end of half-arm 9 itself, and is rotationally mounted on the body of half-arm 8 by interposition of appropriate rolling bearings of known type.

With reference to figures 1 and 2, articulated arm 6 with pantograph-type movement is further provided with a first gear cascade 12 which is adapted to transmit to the body of half-arm 9 the rotary motion with which half-arm 8 rotates about axis A, so that the body of half-arm 9 is forced to rotate with respect to half-arm 8 about axis B at an angular speed which is twice the angular speed with which half-arm 8 rotates about axis A and with direction of rotation opposite to the latter.

In other words, gear cascade 12 is adapted to transmit to the body of half-arm 9 the rotary motion with which half-arm 8 rotates about axis A, so as to coordinate the scissor-like opening of half-arms 8 and 9 with the rotation of half-arm 8 about axis A.

Specifically, in the example shown, gear cascade 12 which synchronises the movement of half-arm 9 about axis B with the movement of half-arm 8 about axis A, is formed by a main toothed wheel 13 which is rigidly keyed onto pin 10 of half-arm 8 and is thus integral also with flat portion 5a of crossbar 5, by a secondary toothed wheel 14 which is rigidly keyed onto the upper end of pin 11 of half-arm 9, and finally by a drive chain 15 looped about the two toothed wheels 13 and 14. Furthermore, toothed wheel 13 has a nominal diameter double that of toothed wheel 14, so that the latter is forced to rotate about axis B at an angular speed twice of that with which half-arm 8 rotates about toothed wheel 13.

In addition to the above, articulated arm 6 with pantograph-type movement further comprises a cylindrical fastening pin 16 which is throughly mounted on the free end of half-arm 9, protrudingly extends from the same end coaxially to an axis C parallel to axes A and B, and is provided on the bottom with a coupling flange or the like onto which mobile gripping member 7 is adapted to be fixed 7, and a second gear cascade 17 which is capable of transmitting to pin 16 the rotary motion with which half-arm 9 rotates with respect to half-arm 8 about axis B.

More in detail, fastening pin 16 is inserted in freely rotating manner in the body of half-arm 9 at a distance l₂ from axis B equal to distance l₁ existing between axis A and axis B. In other words, distance l₁ existing between axis A and axis B is equal to distance l₂ existing between axis B and axis C.

The equality of center distances of two half-arms 8 and 9, i.e. the equality of distances l₁ and l₂ between axes A, B and C and the specific transmission ratio used for the gear cascade 12, allow to coordinate the scissor-like opening of half-arms 8 and 9 with the rotation of half-arm 8 about axis A, so that an angular displacement of half-arm 8 about axis A is transposed into a straight translation of mobile gripping member 7 in a direction d horizontal and perpendicular to vertical reference plane R which remains immobile in space.

As regards instead gear cascade 17, it is adapted to transmit the rotary motion of half-arm 9 with respect to half-arm 8 about axis B with a predetermined transmission ratio to fastening pin 16, so that pin 16 rotates about axis C within half-arm 9 in direction contrary to that with which pin 11 rotates about axis B within half-arm 8, and at an angular speed equal to half the rotation speed of the latter.

In this manner, during the spreading of half-arms 8 and 9, i.e. during the extension of articulated arm 6, gear cascade 17 is capable of making pin 16 turn about axis C within half-arm 9 in phase opposition with respect to half-arm 9 itself, so as to compensate the rotation of the latter about axis B. More in detail, gear cascade 17 is able to make fastening pin 16 rotate with respect to half-arm 9, in turn mobile with a rotary-translation motion, so that, for an external observer, pin 16 and mobile gripping member 7 integral therewith always move by rectilinear motion in direction d without however rotating about the aforesaid axis C.

In other words, gear cascade 17 is able to rotate pin 16 within half-arm 9 so as to maintain, during the extension of the articulated arm 6, mobile gripping member 7 always perfectly parallel to itself.

Specifically, in the example shown, gear cascade 17 comprises a main toothed wheel 18 rotationally fitted on pin 11 of half-arm 8, between the body of half-arm 8 and the body of half-arm 9; a secondary toothed wheel 19 rigidly keyed onto the upper end of pin 16, on the part opposite to mobile gripping member 7; and finally a drive chain 20 looped about the two aforementioned toothed wheels 18 and 19. In this case, main toothed wheel 18 is rigidly fixed to the body of half-arm 8 and presents a nominal diameter equal to half that of secondary gear 19, so that the latter is forced to rotate about axis C at an angular speed half of that with which main gear 18 rotates about half-arm 9.

With reference to figures 1 and 2, apparatus 1 is finally provided with a moving device 21 which is capable, upon command, of rotating half-arm 8 about axis A so as to cause the scissor-like opening of the two half-arms 8 and 9, so as to displace mobile gripping member 7, selectively and alternatively, to either one part or the other of mentioned vertical reference plane R.

Unlike the currently known solutions, moving device 21 comprises an actuating shaft 22 which extends along the side of pin 10 of half-arm 8, parallel to pin 10 itself, and is throughly mounted across the body of supporting crossbar 5, or rather flat portion 5a of crossbar 5, so as to partially protrude underneath the aforesaid crossbar 5 and thus have a lower end facing half-arm 8.

More in detail, shaft 22 extends coaxially to an axis D which is parallel and distanced from axis A, and which preferably, but not necessarily, lays on mentioned vertical reference plane R.

Shaft 22 is capable of rotating about axis D within the body of crossbar 5, and moving device 21 is further provided with a crank 23 which protrudingly extends from the lower end of shaft 22 in a direction substantially perpendicular to axis D and is rigidly keyed onto shaft 22 itself so as to be able to rotate integrally with the latter about axis D, and by a cam follower pin 24 which protrudingly extends from the distal end of crank 23 being maintained coaxial to an axis E parallel and distanced from axis D, so as to be able to slidingly engage an appropriate longitudinal groove 24a obtained in the body of half-arm 8.

Moving device 21 finally comprises a drive unit 25 which is mechanically coupled to actuating shaft 22 so as to be able to rotate the latter about axis D, upon command, either clockwise or anticlockwise, so as to cause the rotation of crank 23 about axis D and the consequent rotation of half-arm 8 about axis A.

Drive unit 25 is obviously fixed onto supporting crossbar 5 and, in the example shown, consists of an electrical ratiomotor 25 of known type which is protrudingly fixed onto crossbar 5, so that its output shaft extends coaxially to axis D, and protrudes underneath support crossbar 5 across a specific through opening obtained in flat portion 5a of crossbar 5, thus forming actuating shaft 22 of moving member 21.

Operation of apparatus 1 as a whole is easily inferred from what described and illustrated above, and consequently does not require further explanations.

As regards instead operation of moving device 21, the clockwise or anticlockwise 90° rotation of crank 23 about axis D displaces cam follower pin 24 along a semi-circular path centred on axis D and selected either on one part or the other of vertical reference plane R. By shifting along this semi-circular path, cam follower pin 24 freely slides within longitudinal groove 24a obtained on half-arm 8, exerting a twisting torque on half-arm 8 which forces it to turn about axis A so as to cause the scissor-like opening of articulated arm 6.

Obviously, the maximum amplitude of rotation angle ∝ of half-arm 8 about axis A depends on the distance existing between axis D and axis E, and on the length and position of longitudinal groove 24a on half-arm 8.

The main advantage of above-described apparatus 1 for the handling of bottles 2 is evident: in virtue of the particular structure of moving device 21, the scissor-like opening of articulated arm 6 no longer requires particularly high torques, also on event of products having a heavier weight than that allowed until now are handled. Indeed, moving device 21 no longer acts directly on pin 10, but exploits the variable distance between axis E of cam follower pin 24 and rotation axis A of half-arm 8 to multiply the twisting torque transmitted by drive unit 25 to shaft 22.

A further advantage of above-described apparatus 1 is that of subjecting the handled products to accelerations of much lower value than those of the solution described in European patent EP-1338536, at the initial and final stretch of the stroke of mobile gripping member 7. Indeed, moving device 21 exerts on half-arm 8 a twisting torque which varies according to the instantaneous position of half-arm 8, and which assumes the maximum value when half-arm 8 is aligned underneath shaft 22, with crank 23 and half-arm 8 parallel to each other and to vertical reference plane R, and the minimum value when crank 23 is arranged perpendicular to mentioned vertical plane R.

It is finally apparent that modifications and variants may be made to product handling apparatus 1 described and shown herein without for this departing from the scope of the present invention.

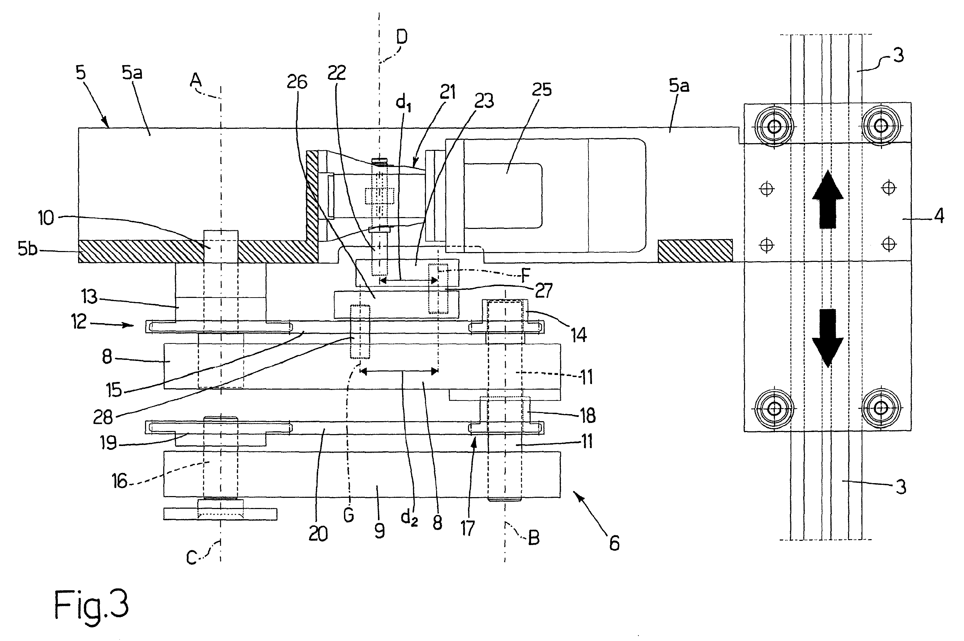

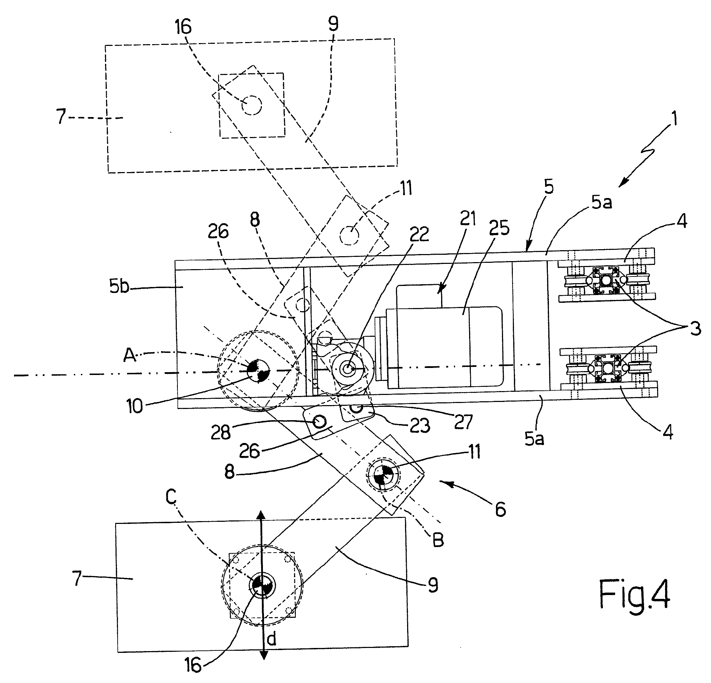

For example, with reference to figures 3 and 4, moving device 21 is free from cam follower pin 24 and the distal end of crank 23 is connected to the body of half-arm 8 by means of a transversal connecting rod 26 which has a first end hinged to crank 23 so as to turn freely about an axis F parallel and distanced from axis D, and has a second end hinged to the body of half-arm 8 so as to be able to freely turn with respect to the latter about an axis G parallel and distanced from axis F.

More in detail, in the example shown, connecting rod 26 extends underneath crank 23 on a plane perpendicular to axes D, F and G, is hinged to the distal end of crank 23 by means of a first cylindrical connection pin 27 which extends coaxially to axis F, and is finally hinged onto the body of half-arm 8 by means of a second cylindrical connection pin 28 which extends coaxially to axis G.

In the example shown, distance d₁ existing between axes D and F has a lower value than distance d₂ existing between axes F and G, but in a different embodiment distance d₁ could also have a value either equal to or higher than distance d₂.

With reference to figure 4, with respect to the solution with cam follower pin 24, the use of connecting rod 26 allows to increase the maximum value of the stroke of mobile gripping member 7 in direction d, without relinquishing any of the advantages offered by such solution. Instead, an appropriate choice of the point in which connecting rod 26 is connected to the body of half-arm 8 and of the value of distances d₁ and d₂ allows to further reduce the accelerations to which bottles 2 are subjected at the initial and final segments of the stroke followed by mobile gripping member 7.

## Claims

1. Apparatus (1) for handling products (2) comprising a supporting crossbar (5) which extends over a handling zone of the products (2) in a substantially horizontal direction, an articulated arm (6) with pantograph-type movement which is fixed to said supporting crossbar (5) so as to be able to open in a scissor-like manner on a substantially horizontal plane which extends over the handling zone of the products (2), and has a mobile gripping member (7) which is fixed onto the free end of the articulated arm (6) so as to face the handling zone of the products (2) underneath and is structured so as to be able to selectively grip and withhold at least one said product (2);
said articulated arm (6) with pantograph-type movement comprising an upper half-arm (8) which is rotationally mounted on the supporting crossbar (5) so as to be able to rotate with respect to the same about a first substantially vertical axis (A), a lower half-arm (9) which is rotationally mounted on said upper half-arm (8) so as to be able of freely rotate with respect to the latter about a second axis (B) parallel to said first axis (A), and a first gear cascade (12) adapted to transmit to the lower half-arm (9) the rotary motion with which the upper half-arm (8) rotates about the first axis (A), so that the lower half-arm (9) is forced to rotate with respect to the upper half-arm (8) about the second axis (B) at an angular speed twice the angular speed with which the upper half-arm (8) rotates about said first axis (A) and with direction of rotation opposite to the latter so as to coordinate the scissor-like opening of said upper (8) and lower (9) half-arms;
said apparatus (1) being further equipped with moving means (21) capable, upon command, of rotating the upper half-arm (8) about said first axis (A) so as to cause the scissor-like opening of said articulated arm (6) with pantograph-type movement so as to displace said mobile gripping member (7);
said apparatus (1) being **characterised in that** the moving means (21) comprise
- an actuating shaft (22) which extends coaxially to a third axis (D) parallel and distanced from said first axis (A) and is rotationally mounted on said supporting crossbar (5) with an axial end thereof facing said upper half-arm (8),
- a crank (23) which is rigidly keyed onto the axial end of said actuating shaft (22) and which protrudingly extends from the actuating shaft (22) itself in a direction substantially perpendicular to said third axis (D),
- a drive unit (25) mechanically coupled to said actuating shaft (22) so as to be able to rotate it either clockwise or anticlockwise, upon command, about said third axis (D) so as to cause the rotation of the crank (23) about the same third axis (D), and finally
- a mechanical connection member (24, 24a)(26, 27, 28) adapted to connect the distal end of said crank (23) to the body of said upper half-arm (8).

2. Apparatus according to claim 1, **characterised in that** said mechanical connection member (24, 24a)(26, 27, 28) comprises a cam follower pin (24) which protrudingly extends from the distal end of said crank (23) coaxial to a fourth axis (E) parallel and distanced from said third axis (D), so as to be able to slidingly engage a longitudinal groove (24a) obtained on the body of said upper half-arm (8).

3. Apparatus according to claim 1, **characterised in that** said mechanical connection member (24, 24a) (26, 27, 28) comprises a transversal connecting rod (26) which has a first end hinged to said crank (23) so as to be able to freely rotate about a fifth axis (F) parallel and distanced from said third axis (D), and has the second end hinged to the body of said upper half-arm (8) so as to be able to rotate about a sixth axis (G) parallel and distanced from said fifth axis (E).

4. Apparatus according to claim 3, **characterised in that** said mechanical connection member (24, 24a) (26, 27, 28) comprises a transversal connecting rod (26) which has a first end hinged to said crank (23) so as to be able to freely rotate about a fifth axis (F) parallel and distanced from said third axis (D), and has the second end hinged to the body of said upper half-arm (8) so as to be able to freely rotate about a sixth axis (G) parallel and distanced from said fifth axis (E).

5. Apparatus according to claim 4, **characterised in that** said transversal connecting rod (26) extends underneath said crank (23) on a plane perpendicular to said third (D), fifth (F) and sixth axes (G), is hinged on the distal end of said crank (23) by means of a first connection pin (27) which extends coaxially to said fifth axis (F), and is hinged onto the body of said upper half-arm (8) by means of a second connection pin (28) which extends coaxially to said sixth axis (G).

6. Apparatus according to any of the preceding claims, **characterised in that** said upper half-arm (8) is hinged onto said supporting crossbar (5) at its first end by means of a first through pin (10) which extends coaxially to said first axis (A) and which engages the body of said first half-arm (8) in a freely rotational manner, and **in that** said lower half-arm (9) has a first end hinged onto the second end of said upper half-arm (8) by means of a second through pin (11) which extends coaxially to said second axis (B), is rigidly keyed onto the lower half-arm (9), and is rotationally mounted on the upper half-arm (8).

7. Apparatus according to any of the preceding claims, **characterised in that** said articulated arm (6) with pantograph-type movement further comprises a fastening pin (16) which is throughly mounted on the free end of the lower half-arm (9), protrudingly extends from the same free end being maintained coaxial to a fifth axis (C) parallel to the first axis (A), and is finally structured to support said mobile gripping member (7); the distance (l₂) which separates said fifth axis (C) from said second axis (B) being equal to the distance (l₁) which separates said first axis (A) from said second axis (B).

8. Apparatus according to claim 7, **characterised in that** said articulated arm (6) with pantograph-type movement further comprises a second gear cascade (17) which is capable of transmitting to said fastening pin (16) the rotary motion with which the lower half-arm (9) rotates with respect to the upper half-arm (8) about said second axis (B), so that the fastening pin (16) rotates about said fifth axis (C) with respect to the lower half-arm (9) in direction opposite to that with which the lower half-arm (9) rotates about the second axis (B) with respect to the upper half-axis (8), and at an angular speed equal to half the rotation speed of the latter.

9. Apparatus according to any of the preceding claims, **characterised in that** it comprises a supporting structure resting on the ground which is provided with a rectilinear supporting guide (3) which extends in a substantially vertical direction along the side of said handling zone of the products (2), a supporting carriage (4) slidingly mounted on said rectilinear guide (3) and handling means capable, upon command, of displacing the supporting carriage (4) along said rectilinear guide (3); the supporting crossbar (5) being protrudingly fixed onto said supporting carriage (4) over the handling zone of the products (2).
